# EUROPEAN PATENT SPECIFICATION

(11) **EP 0 653 166 B1**
(45) Date of publication and mention of the grant of the patent: **28.10.1998**
(21) Application number: 94203306.9
(22) Date of filing: 11.11.1994
(51) Int. Cl.: A23L 1/24, A23L 1/39, A23L 1/0534

(54) **Pourable thick foundation sauce**
Vergiessbarer verdickter Saucegrund
Fond de sauce épais versable

(30) Priority: 12.11.1993 NL 9301965
(43) Date of publication of application: 17.05.1995
(73) Proprietor: Verenigde Coöperatieve Melkindustrie Coberco B.A., NL-7201 NM Zutphen (NL)
(72) Inventor: te Roller, Johan Martinet, NL-7201 JT Barlheze (NL); van Schouwenburg, Aaltje Wytske Jantje, NL-8101 CR Raalte (NL); van den Boogaard, Cornelis, NL-7213 BW Gorssel (NL)
(74) Representative: Smulders, Theodorus A.H.J., Ir.

(56) References cited:
- EP-A- 0 049 705
- AU-B- 549 519
- GB-A- 2 249 467
- US-A- 4 214 009
- J.KAMSTEEG ET AL. 'E = eetbaar? Alle E-nummers en de belangrijkste overige additieven' 1986 , H.J.W.BECHT , AMSTERDAM,NL pages 130-132 * E 461- E 465*

## Description

This invention relates to a pourable sauce which keeps well for a relatively long time. More particularly, this invention relates to a pourable, ready-for-use, thick sauce which can be eminently and simply enriched to form sauces such as hollandaise sauce, béarnaise sauce, choron sauce, white wine sauce, beurre blanc, vegetable sauce, mousseline sauce, dijonnaise sauce, dill sauce, lemon sauce, etc.. This product has been primarily developed for restaurateurs/domestic caterers who thus have at their disposal a product which is easy to process and on the basis of which they can prepare a sauce in a short time. In addition, the product is also suitable for household use.

Traditionally, the above-mentioned sauces are typically prepared on the basis of a butter sauce, also referred to as egg sauce. Butter sauce essentially comprises egg yolk, lemon juice or wine, and butter. It is a highly temperature-sensitive product which curdles very quickly and is therefore generally prepared in a bain-marie. Further, the product must be consumed soon after its preparation. All this means that a restaurateur or domestic caterer cannot keep the product in store but must on each occasion prepare a desired amount and so traverse the time-consuming steps of preparation.

A number of sauces are known which solve the outlined stocking problem to some extent. For instance, the firm of Henri B.V. markets a hollandaise sauce which can be heated to about 40°C in a bain-marie with stirring. This instant sauce is substantially composed of egg yolk, butter, white wine, water, flavoring, vegetables, caseinate, salt and vegetable protein hydrolysate. At refrigeration temperature, the product has a very thick, ragout-like consistency and can be scooped from the package. When this product, which contains about 33% fat, is heated to a temperature above about 60°C, fat separation arises. Also, lumps are formed, which cannot be eliminated anymore through stirring. The product is quick to burn. Because this sauce is an emulsion sauce of butter, the product has an agreeable taste.

The problems relating to heating are not solved by the above-discussed known product. These problems arise to a lesser extent in products having relatively high contents of vegetable oils, for instance Garde d'Or, hollandaise sauce, Uniquisine, sold in the Netherlands by Van den Bergh Professional B.V. Rotterdam.

As a result of its relatively high content of vegetable oils, this known ready-for-use product is substantially fluid, though a part of the sauce must be removed from the package by means of a spatula or the like. This product consists substantially of vegetable oil (fat content 58%), water, egg yolk, maltodextrin, a mixture of thickening agents (carob flour, guar gum and xanthan gum) and lactic acid. The sauce can be readily heated, also in the microwave oven, without the product curdling.

Although such known sauces do not curdle and therefore can be readily heated, they have a number of disadvantages. More particularly, the sauce gets appreciably thinner during heating, so that it cannot be properly applied as a standing sauce in that, for instance, it flows off the meat or spreads over the plate. Further, these sauces are high-caloric because of their high fat content. In addition, as a result of the high vegetable fat content, the sauce tastes of warm mayonnaise, which renders it less suitable for a number of applications.

Accordingly, there is a need for a thick foundation sauce which keeps well for a relatively long time, can be easily dosed, does not curdle upon heating, does not burn, and does not become essentially thinner at high temperatures.

The present invention now provides a product which satisfies all of these requirements.

The foundation sauce according to the invention comprises substantially 10-60% fat, 0.1-2% of a cellulose derivative selected from methyl cellulose, ethyl cellulose, methyl ethyl cellulose and hydroxypropyl methyl cellulose, 0.1-3% thickening agent, and the balance an aqueous phase of a pH ≤ 5.

It is known that the water-binding capacity of the above-mentioned cellulose derivatives is partly determined by the degree of substitution and the molecular weight. Low- and high-viscosity types are commercially available. The amount or cellulose derivative to be used depends on the type used and can be simply determined by those skilled in the art. Generally, the molecular weights of commercially available methyl, ethyl and ethyl methyl cellulose vary between 40,000 and 180,000, while hydroxypropyl methyl cellulose is available with a molecular weight of from 4000.

The use of cellulose derivatives in starch-based products is known from British patent application 2,249,467. The object of this publication is to provide an improved process for pasteurizing or sterilizing starch-containing products in a package, for instance in cans. It is stated that the viscosity of the cooled product after pasteurization or sterilization is equal to or higher than the viscosity of the product not yet subjected to the heat treatment.

EP 0 049 705 teaches the use of a composition comprising a fat, an emulsifier, a thickening agent such as a cellulose ether and water for the preparation of a low fat viscous, non-flowable comestible spread.

The foundation sauce according to the invention does not curdle, not even upon being heated to the boiling point of the sauce. The sauce can be heated repeatedly without giving rise to undesired effects, such as lump formation. It is even possible to simmer the sauce for a prolonged time without the sauce burning. The sauce does not burn because the product is free of proteins. If, as a result of evaporation, too much water has disappeared from the sauce, water can simply be added with stirring without giving rise to quality problems. Further, the sauce according to the invention can be used in the microwave oven without any objections. The sauce can be frozen and later be heated without any problem.

A major advantage of the sauce according to the invention is that the product remains thick even at a high temperature and can be eminently applied as a standing sauce.

An additional advantage is that the foundation sauce according to the invention, like the traditionally prepared butter sauce but unlike the above-discussed known sauces, allows air to be beaten into it. This renders the sauce fluffy.

In a preferred embodiment, the ratio between the highest and lowest viscosity values in the temperature range of 5-95°C, measured with a Rheometrics Dynamic Stress Rheometer DSR at a shearing rate of 10 rad/s - which shearing rate substantially corresponds with stirring in a saucepan and the shearing rate in the mouth - is less than 4.

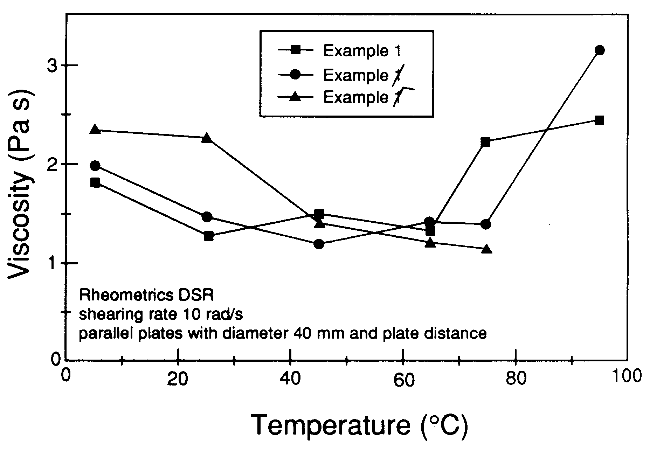

The drawing shows the viscosity values in the indicated temperature range of three sauces according to the invention.

The fat fraction in the sauce according to the invention can be formed by both animal and vegetable oils and fats, as well as mixtures thereof. Depending on the desired taste, food-physiological properties and/or cost price of the foundation sauce, it is possible to choose, for instance, from animal fats such as suet, lard and vegetable fats. Preferably, however, butter, butter oil and/or butter oil fractions are employed. When these butter products are used as starting material, an excellent, neutral sauce is obtained which can form an excellent basis for other sauces.

The oil and/or fat fraction accounts for 10-60 wt.%, preferably 15-50 wt.% and most preferably 15-40 wt.% of the total sauce composition. When less than 10% fat is present, a gelatinous or custard-like sauce with little color arises. When vegetable fat is used, the fat fraction can account for up to 60% of the sauce. Starting from butter products, high percentages of fat may be used in the sauce to obtain an excellent product. For pricing reasons, however, the butter content will typically not exceed 30%. Such a sauce can moreover be recommended as a low-calorie sauce.

An essential constituent of the sauce according to the invention is a cellulose derivative selected from methyl cellulose (E461), ethyl cellulose (E462), methyl ethyl cellulose (E465), hydroxypropyl ethyl cellulose (E464) or mixtures thereof. The cellulose derivatives mentioned give the sauce according to the invention a desired viscosity at high temperatures, which is indispensable to its behavior as a standing sauce upon being applied. Most cellulose derivatives and other known thickeners do not display this behavior. Sauces incorporating these other thickeners, for instance carboxymethyl cellulose and the gums which are used in the above-described product of Uniquisine, lead to a product having an appreciably thinner, less viscous consistency. The cellulose derivatives are typically used in an amount of between about 0.1 and 2 wt.%. When less than 0.1 wt.% of the limited group of cellulose derivatives and preferably of methyl cellulose is used, the sauce does not acquire the desired consistency at an elevated temperature. If, on the other hand, more than 2 wt.% of cellulose derivative is present, the sauce gives a sticky mouthfeel and looks slimy. Preferred ranges for the limited group of cellulose derivatives are between 0.15 and 1.5 wt.%.

Preferably used is methyl cellulose. This product is marketed *inter alia* under the name of Methocel™ (DOW Chemical Company), type numbers A4M, A4C, K4M, K100M.

As thickening agent, any thickener conventionally used in this branch of the art, other than the cellulose derivatives specifically mentioned, can be used, which has a thickening effect at a pH ≤ 5 and at a relatively low temperature. It is preferred to use a modified starch which is not hydrolyzed, or hardly so, in an acid environment, for instance acetylated starch. As a suitable example, the product Clearam™ CH20 of Roquette, Lille, France, can be mentioned. Further, other thickeners conventionally used in this branch of the art can be used, such as gums, for instance guar gum or xanthan gum. These thickeners make for a product that has a suitable viscosity and stability at refrigerating and room temperatures.

The thickeners may be present in small amounts if their role is partly taken over by other substances, for instance by egg yolk or egg yolk powder. Preferably, however, in all cases at least 0.1% starch or gum is added in order to provide a stable product. In the sauce according to the invention, the thickeners used seem to function both as stabilizer and as thickener.

The amount of thickener to be used depends on the amount and the type of fat. The lower the fat content, the higher the thickener content should be. If vegetable oil is used in the sauce according to the invention, more thickeners will have to be used than in the case of animal fat in order to obtain a stable product of the desired consistency.

The thickener referred to will typically be present in an amount of between 0.1 and 3 wt.%, preferably between 0.2 and 2 wt.% and most preferably between 0.3 and 1.5 wt.%.

The viscosity behavior of the sauce according to the invention is very important. A desired viscosity at different temperatures is mainly achieved by the interaction of the fat fraction, the thickener and the specific cellulose derivatives.

As aqueous phase, in principle any aqueous phase acidified with acids conventional in the food industry can be used. The pH will be 5 at most. The taste of sauces according to the invention with a pH higher than 5 is less good, and further such a product will sooner be subject to decay. The pH will typically be between 3.5 and 5, although it is often no objection if the product is more acid.

To water can be added, for instance, wine, citric acid, lactic acid or acid whey. Preferably, however, acid fresh cheese whey or acid fresh cheese whey permeate is used. Acid fresh cheese whey or acid fresh cheese whey permeate is a by-product of fresh cheese making. These products are frequently used in the feedingstuff industry. This aqueous phase gives the sauce a fresh taste and a good mouthfeel (body).

The sauces according to the invention can be prepared in conventional manner. From the aqueous phase, the fat fraction and optionally emulsifiers, an emulsion is prepared which is homogenized. Since the cellulose derivatives are relatively difficult to process, the temperature is subsequently raised above 65°C, whereafter thickener and cellulose derivative are added. Without cooling down to a temperature below 60°C, the mixture is then subjected to a heat treatment (temperatures higher than 95°C), such that the desired keeping property is obtained, whereafter the product is cooled to below 30°C. Through these steps the cellulose derivative has passed into solution completely. After this cooling step, the sauce according to the invention can be packaged. When this sauce is subsequently heated, the cellulose derivative binds water at higher temperatures, so that a sauce with all the advantages of the invention has been formed.

When the product has been heated for a prolonged time, some fat separation may occur. Although the released amount of fat can be stirred into the sauce again without any problems and adverse effects, it is preferred to limit such fat separation as far as possible. It has been found that this process can be limited by adding an emulsifier to the sauce. In a preferred embodiment, the sauce according to the invention contains up to 1 wt.% emulsifier.

In principle, any emulsifier conventional in this branch of the art can be used. Excellent results are obtained if in the sauce a mixture of 0.2-0.4 wt.%, preferably 0.3 wt.%, mono- and diglycerides in combination with 0.1-0.3 wt.%, preferably 0.2 wt.%, polyglycerol esters is present as emulsifier system.

Further, in a preferred embodiment, egg yolk or egg yolk powder is used. These ingredients give the sauce more taste and color, while further the emulsifying capacity is increased. Egg yolk or egg yolk powder is used in an amount of 0-5%, preferably in an amount of 2-3%.

In a preferred embodiment, the sauce according to the invention is prepared from 20-30% butter, butter oil and/or butter oil fractions, 1-5% egg yolk or egg yolk powder, 0.1-2% modified starch, 0.1-2% methyl cellulose, 0-1% emulsifier and acid fresh cheese whey or acid fresh cheese whey permeate as aqueous phase. This sauce resembles traditionally prepared butter sauce in taste properties but has all of the advantages of the product according to the invention. As far as taste is concerned, this foundation sauce can be used directly as a ready sauce.

The foundation sauce can be simply enriched by adding butter, vegetables, spices, herbs, wine, etc. In a preferred embodiment, the sauce according to the invention comprises aromatic substances, colorants and flavoring. As aromatic substances, colorants and flavor, substantially all of the compounds and compositions known as such to those skilled in the art can be used.

### Example 1

An emulsion was prepared from 23 parts by weight of butter oil, 3 parts by weight of egg yolk powder, 0.3 parts by weight of monoglycerides, 0.2 parts by weight of polyglycerol ester and 71.04 parts by weight of acid fresh cheese whey permeate. This emulsion was brought to 70°C and homogenized at a homogenization pressure of 100 kg/cm² in a Rannie homogenizer in the usual manner. After this homogenization step, while maintaining the temperature at 65°C, 0.76 parts by weight of methyl cellulose (Methocel™ A15LVP, Dow Chemical Company) and 1.7 parts by weight of modified starch (Clearam CH20™, an acetylated distarch adipate 1422 modification H) were added. Then the emulsion so obtained was subjected to a heating step at 100°C for 4 seconds. Then the emulsion was cooled to below 10°C. As a result of the heating and cooling step, the dispersed methyl cellulose dissolved completely. A thick fluid smooth emulsion was obtained which was well pourable.

By subsequently heating the emulsion obtained, water was bound by the methyl cellulose, so that a sauce of good viscosity is obtained even at high temperatures.

The sauce according to the invention resembled a traditionally prepared butter sauce in taste and consistency. Particularly by the use of butter and acid fresh cheese whey permeate, an excellent taste profile was obtained.

### Examples 2-4

Example 1 was essentially repeated. Only the amounts of the starting materials were varied, while further in one case butter oil was replaced with soy bean oil. All this is specified in Table 1.

**TABLE 1**

| Examples | 1 | 2 | 3 | 4 |
|---|---|---|---|---|
| Soy bean oil | - | - | 40 | - |
| Butter oil | 23 | 10 | - | 23 |
| Egg yolk powder | 3 | 3 | 3 | 3 |
| Monoglycerides | 0.3 | 0.3 | 0.4 | 0.3 |
| Polyglycerol ester | 0.2 | 0.2 | 0.2 | 0.2 |
| Modified starch | 1.7 | 2.2 | 1.3 | 1.7 |
| Methyl cellulose | 0.76 | 1.0 | 0.6 | 0.76 |
| Acid permeate | 71.04 | 83.3 | 54.5 | 71.04 |

### Example 5

The viscosities of the sauces prepared according to Examples 1, 2 and 4 were measured with a Rheometrics Dynamic Stress Rheometer DSR. More particularly, the shearing rate/shearing stress curve in equilibrium was measured at different temperatures. The measurements were performed between parallel plates of a diameter of 40 mm and a gap width of about 1 mm. This method is a standard technique (see, for instance, Prentice, J.H., Dairy Rheology: a concise guide, VCH Publishers, New York, 1992) for determining viscosities. The measured viscosities are independent of the diameter and gap width. However, the gap width has to be relatively large with respect to the particle size in the product to be measured.

The viscosities are indicated in Pa.s in Table 2, at a shearing rate of 10 as well as of 100 rad/s. The results obtained at a shearing rate of 10 rad/s are visualized in the drawing.

**TABLE 2**

| Temp. | Example 1 | | Example 2 | | Example 4 | |
|---|---|---|---|---|---|---|
| | η₁₀ | η₁₀₀ | η₁₀ | η₁₀₀ | η₁₀ | η₁₀₀ |
| 5°C | 1.816 | 0.677 | 1.975 | 0.480 | 2.331 | 0.616 |
| 25°C | 1.267 | 0.425 | 1.463 | 0.339 | 2.246 | 0.491 |
| 45°C | 1.486 | 0.286 | 1.183 | 0.230 | 1.394 | 0.295 |
| 65°C | 1.309 | 0.317 | 1.408 | 0.298 | 1.202 | 0.227 |
| 75°C | 2.204 | 0.499 | 1.376 | 0.290 | 1.124 | 0.250 |
| 95°C | 2.411 | | 3.120 | 0.434 | | |

## Claims

1. A pourable, ready-for-use, thick sauce, substantially comprising 10-60% fat, 0.1-2% of a cellulose derivative selected from methyl cellulose, ethyl cellulose, methyl ethyl cellulose and hydroxypropyl methyl cellulose, 0.1-3% thickening agent, and the balance an aqueous phase of a pH ≤ 5.

2. A sauce according to claim 1, wherein the ratio of the highest and lowest viscosity values in the temperature range of 5-95°C, measured with a Rheometrics Dynamic Stress Rheometer DSR at a shearing rate of 10 rad/s, is less than 4.

3. A sauce according to claim 1 or 2, wherein as fat fraction, butter, butter oil and/or butter oil fractions are used.

4. A sauce according to any one of the preceding claims, wherein further up to 1% emulsifier is incorporated.

5. A sauce according to any one of the preceding claims, wherein acid fresh cheese whey permeate is used as aqueous phase.

6. A sauce according to any one of the preceding claims, wherein methyl cellulose is used.

7. A sauce according to any one of the preceding claims, wherein up to 5% egg yolk or egg yolk powder is included.

8. A sauce according to any one of the preceding claims, comprising 20-30% butter, butter oil and/or butter oil fractions, 1-5% egg yolk or egg yolk powder, 0.1-2% modified starch, 0.1-2% methyl cellulose, 0-1% emulsifier and acid fresh cheese whey and/or acid fresh cheese whey permeate as aqueous phase.

9. A sauce according to any one of the preceding claims, comprising aromatic substances, colorants and flavoring.

## Patentansprüche

1. Im wesentlichen aus 10 bis 60% Fett, 0,1 bis 2% eines aus Methylcellulose, Ethylcellulose, Methylethylcellulose und Hydroxypropylmethylcellulose ausgewählten Cellulosederivats, 0,1 bis 3% Verdickungsmittel und Rest eine wäßrige Phase mit einem pH-Wert ≤ 5 bestehende härtbare gebrauchsfertige dicke Sauce.

2. Sauce nach Anspruch 1, worin das Verhältnis der höchsten und niedrigsten Viskositätswerte im Temperaturbereich von 5 bis 95°C, gemessen mit einem Rheometrics Dynamic Stress Rheometer DSR bei einer Scherrate von 10 rad/s, weniger als 4 beträgt.

3. Sauce nach Anspruch 1 oder 2, worin als Fettfraktion Butter, Butteröl und/oder Butterölfraktionen verwendet werden.

4. Sauce nach einem der vorhergehenden Ansprüche, worin weiter bis zu 1 % Emulgiermittel eingearbeitet ist.

5. Sauce nach einem der vorhergehenden Ansprüche, worin saures Frischkäsemolkepermeat als wäßrige Phase verwendet wird.

6. Sauce nach einem der vorhergehenden Ansprüche, worin Methylcellulose verwendet wird.

7. Sauce nach einem der vorhergehenden Ansprüche, worin bis zu 5% Eigelb oder Eigelbpulver eingeschlossen sind.

8. Eine 20 bis 30% Butter, Butteröl und/oder Butterölfraktionen, 1 bis 5% Eigelb oder Eigelbpulver, 0,1 bis 2% modifizierte Stärke, 0,1 bis 2% Methylcellulose, 0 bis 1% Emulgiermittel und saure Frischkäsemolke und/oder saures Frischkäsemolkepermeat aufweisende Sauce nach einem der vorhergehenden Ansprüche.

9. Eine aromatische Substanzen, Farb- und Geschmacksstoffe aufweisende Sauce nach einem der vorhergehenden Ansprüche.

## Revendications

1. Sauce épaisse, versable et prête à l'emploi, contenant sensiblement 10 à 60 % de matière grasse, 0,1 à 2 % d'un dérivé de cellulose choisi parmi la méthylcellulose, l'éthylcellulose, la méthyléthylcellulose et l'hydroxypropyle méthylcellulose, 0,1 à 3 % d'agent épaississant et pour le reste une phase aqueuse de pH ≤ 5.

2. Sauce selon la revendication 1, caractérisée en ce que le rapport de la viscosité maximale sur la viscosité minimale sur une plage de températures de 5 à 95 C°, mesurées à l'aide d'un rhéomètre DSR (Contrainte Dynamique Rhéométrique) à une vitesse de cisaillement de 10 rad/sec, est inférieur à 4.

3. Sauce selon la revendication 1 ou 2, caractérisée en ce que le composant gras qu'elle contient consiste en du beurre, de l'huile de beurre et/ou des fractions d'huile de beurre.

4. Sauce selon l'une quelconque des revendications précédentes, caractérisée en ce qu'elle contient en outre jusqu'à 1 % d'émulsifiant.

5. Sauce selon l'une quelconque des revendications précédentes, caractérisée en ce que la phase aqueuse consiste en un perméat de lactosérum de fromage frais acide.

6. Sauce selon l'une quelconque des revendications précédentes, caractérisée en ce qu'elle contient de la méthylcellulose.

7. Sauce selon l'une quelconque des revendications précédentes, caractérisée en ce qu'elle contient jusqu'à 5 % de jaune d'oeuf ou de poudre de jaune d'oeuf.

8. Sauce selon l'une quelconque des revendications précédentes, contenant 20 à 30 % de beurre, d'huile de beurre et/ou de fractions d'huile de beurre, 1 à 5 % de jaune d'oeuf ou de poudre de jaune d'oeuf, 0,1 à 2 % d'amidon modifié, 0,1 à 2 % de métylcellulose, 0 à 1 % d'émulsifiant ainsi que du lactosérum de fromage frais acide et/ou un perméat de lactosérum de fromage frais acide en tant que phase aqueuse.

9. Sauce selon l'une quelconque des revendications précédentes, comprenant des substances aromatiques, des colorants et des agents de sapidité.
